# EUROPÄISCHE PATENTSCHRIFT

(11) **EP 2 092 176 B1**
(45) Veröffentlichungstag und Bekanntmachung des Hinweises auf die Patenterteilung: **20.07.2011**
(21) Anmeldenummer: 07846500.2
(22) Anmeldetag: 23.10.2007
(51) Int. Cl.: F02B 37/18

(54) **TURBOLADER**
TURBOCHARGER
TURBOCOMPRESSEUR

(30) Priorität: 11.12.2006 DE 102006058341
(43) Veröffentlichungstag der Anmeldung: 26.08.2009
(60) Teilanmeldung: 10013470.9
(73) Patentinhaber: BorgWarner, Inc., Auburn Hills, MI 48326-2872 (US)
(72) Erfinder: KOCH, Silvio, 67292 Kirchheimbolanden (DE); KÖRNER, Thomas, 45661 Recklinghausen (DE); WICKERT, Rainer, 55468 Schönborn (DE)
(74) Vertreter: Schmitz, Hans-Werner
(86) Internationale Anmeldenummer: PCT/EP2007/009194
(87) Internationale Veröffentlichungsnummer: WO 2008/071254

(56) Entgegenhaltungen:
- WO-A-2007/103860
- DE-B- 1 151 673
- GB-A- 960 110
- JP-A- 4 272 430
- JP-A- 61 207 829
- US-A- 4 719 757

## Beschreibung

Die Erfindung betrifft eine Ladedruckregelklappen anordnung gemäss dem Oberbegriff des Anspruchs 1 und einen Turbolader gemäß dem Oberbegriff des Anspruchs 5.

Eine derartige Ladedruckregelklappen anordnung ist aus der EP 1 626 212 A1 bekannt. Die dortige Ladedruck regelklappen anordnug weist eine Regelklappe auf, die in der Abgas-Bypassleitung zur Regelung des Ladedrucks angeordnet ist. Diese Regelklappe ist aufgrund ihrer Geometrie nur für kleine Klappendurchmesser bzw. Massenströme geeignet. Diese Geometrie ist zum einen dadurch gekennzeichnet, dass die Drehachse der Klappenwelle nicht in der Dichtebene der Klappe liegt, sondern einen Versatz dazu aufweist und zum anderen durch eine zylindrische Verbindungseinrichtung zwischen Hebel und Klappenteller. Bei Belastung wandert der Kontaktpunkt zwischen Klappenteller und Hebel infolge Schrägstellung der Klappenwelle aufgrund des Lagerspiels aus der theoretischen Mitte und erzeugt dadurch eine nicht zentrisch wirkende Anpreßkraft auf den Teller. Je nach Größe des Spiels der Verbindungseinrichtung Hebel/Klappenteller, kann dies dazu führen, dass der Klappenteller eine ungleichmäßige Anpresskraft über seinem Umfang erfährt oder dass der Klappenteller nicht komplett zur Auflage am Dichtsitz kommt, womit stark erhöhte Leckagen einhergehen. Diese Problematik ist durch Vergrößerung des Spiels der Verbindungseinrichtung nicht zu lösen, da hierdurch die Relativbewegung des Klappentellers kurz vor dessen Auftreffen auf den Dichtsitz verstärkt wird, was im Betrieb zu erhöhtem Verschleiß und damit erhöhter Leckage führt.

Es ist demgegenüber Aufgabe der vorliegenden Erfindung, eine Ladedruckregelklappen anordnung gemäss dem Oberbegriff des Anspruchs 1 und einen Turbolader einer gemäß dem Oberbegriff des Anspruchs 5 angegebenen Art zu schaffen, deren, Ladedruckregelklappe eine deutliche Reduzierung der Leckagemenge im Neuzustand ermöglicht und durch geringen Verschleiß im Betrieb beibehält.

Die Lösung dieser Aufgabe erfolgt durch die Merkmale des Anspruchs 1.

Die Unteransprüche 2-4 haben vorteilhafte Weiterbildungen der Erfindung zum Inhalt.

In Anspruch 5 und 6 ist ein erfindungsgemäße Turbolader nit einer Ladedruckregelklappen anordnung als selbstständig handelbares Objekt definiert. Die Ladedruckregelklappe ist sowohl als Bypassregeleinheit einer Turbine, wie auch als Regeleinheit eines Verdichters insbesondere bei mehrstufiger Aufladung einsetzbar.

Weitere Einzelheiten, Vorteile und Merkmale der Erfindung ergeben sich aus nachfolgender Beschreibung eines Ausführungsbeispiels anhand der Zeichnung.

Es zeigt:
Fig. 1 eine schematisch stark vereinfachte Darstellung des erfindungsgemäßen Turboladers,
Fig. 2 eine Seitenansicht der erfindungsgemäßen Regelklappe,
Fig. 3 eine Querschnittsansicht einer Ausführungsform der Ladedruckregelklappe, und
Fig. 4 eine Querschnittsansicht einer weiteren Ausführungsform der Ladedruckregelklappe.

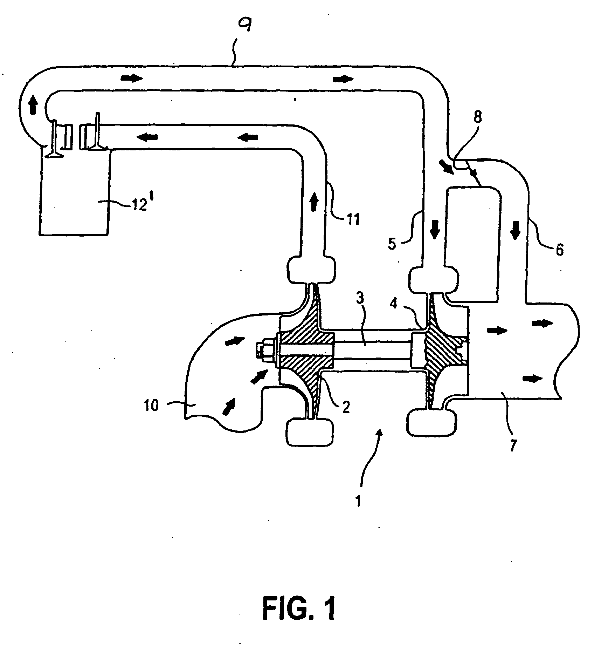

In Fig. 1 ist eine schematisch stark vereinfachte Darstellung des erfindungsgemäßen Turboladers 1 dargestellt.

Der Turbolader 1 weist einen Verdichter 2 auf, dessen Verdichterrad über eine Welle 3 mit einem Turbinenrad einer Turbine 4 in Verbindung steht.
Die Turbine 4 weist einen Abgaseinlass 5 auf, der mit einer Abgasleitung 9 eines Verbrennungsmotors in Verbindung steht.

Ferner weist die Turbine 4 einen Abgasauslass 7 auf.

Fig. 1 verdeutlicht ferner eine Bypassleitung 6, die vor dem Turbinen-Eintritt vom Abgaseinlass 5 abzweigt und direkt zum Abgasauslass 7 führt, sodass durch diese Bypassleitung 6 die Turbine 4 umgangen wird.

In der Bypassleitung 6 ist ein Absperrorgan 8 angeordnet, das beispielsweise als so genanntes "Wastegate" ausgebildet sein kann. Das Absperrorgan 8 weist eine erfindungsgemäße Ausbildung einer Ladedruckregelklappe 16 auf, die nachfolgend anhand verschiedener Ausführungsformen detailliert beschrieben wird.

Fig. 1 verdeutlicht zur Vervollständigung ferner einen Lufteintritt 10 in den Verdichter 2 und einen Luftaustritt 11 aus dem Verdichter 2, der durch den Verdichter 2 verdichtete Luft zum Verbrennungsmotor 12' leitet.

Der Turbolader 1 gemäß Fig. 1 weist natürlich alle weiteren üblichen Teile auf, die jedoch zur Vereinfachung in Fig. 1 nicht dargestellt sind, da sie für die Erläuterung der Erfindung nicht von Bedeutung sind.

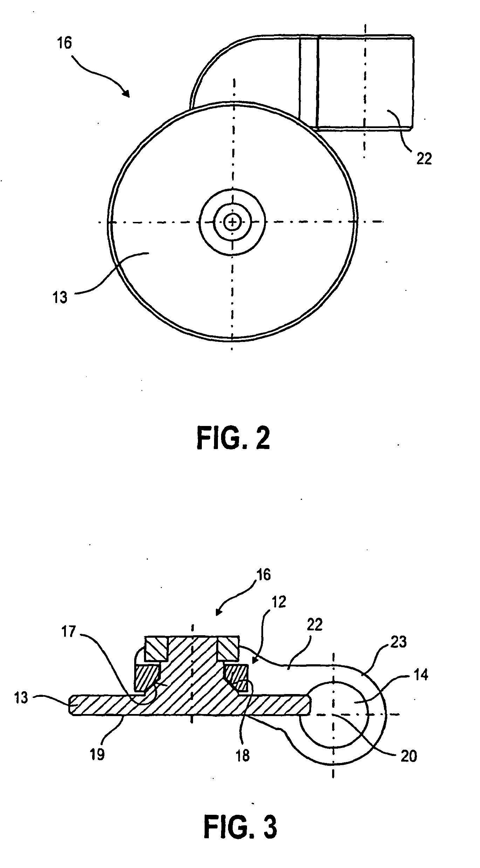

Fig. 2 zeigt eine Seitenansicht der erfindungsgemäßen Ladedruckregelklappe 16 mit einem Klappenteller 13 und einem Hebel 22 einer Verbindungseinrichtung 12, die nachfolgend näher beschrieben wird.

In Fig. 3 ist in einer Querschnittsansicht eine erste Ausführungsform einer Gesamtanordnung der erfindungsgemäßen Ladedruckregelklappe 16 veranschaulicht. Hierin ist der Klappenteller 13 über die Verbindungseinrichtung 12 mit der Klappenwelle 14 verbunden. Wie aus der Darstellung ersichtlich, weist die Verbindungseinrichtung 12 den Hebel 22 auf, der an der Welle 14 über einen Befestigungsabschnitt 23 befestigt ist. Die Mittelachse 20 der Welle 14 liegt in der gemeinsamen Ebene mit einer Dichtebene 19 des Klappentellers 13. Die Verbindungseinrichtung 12 steht über eine z.B. konusförmige Kontaktfläche 17 des Hebels 22 mit einer gekrümmten, z. B. ballig gerundeten, Gegenfläche 18 des Klappentellers 13 in Wirkverbindung.

In einer weiteren Ausführungsform der Erfindung kann die Paarung der Kontaktfläche/Gegenfläche des Klappentellers 13 bzw. des Hebels 22 auch umgekehrt vorgenommen sein, d. h. die gekrümmte Gegenfläche 18 ist am Hebel 22 ausgebildet und die konusförmige Kontaktfläche 17 ist am Klappenteller 13 ausgebildet.

Durch diese Formgebung der Paarung der Kontaktfläche 17 bzw. Gegenfläche 18 wird ein umlaufender Kontakt zwischen dem Klappenteller 13 und dem Hebel 22 auch unter Belastung gewährleistet. Der theoretische Kontaktpunkt bleibt somit in der Mitte des Klappentellers 13 bestehen und die Leckagemenge kann dadurch deutlich reduziert werden.

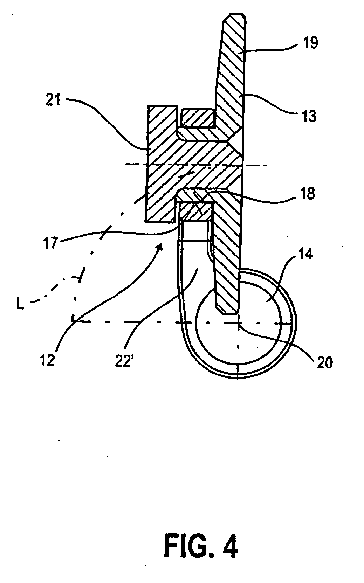

Fig. 4 zeigt eine weitere Ausführungsform der Erfindung. Wie aus dieser Darstellung ersichtlich, weist die Verbindungseinrichtung 12 hierbei einen modifizierten, gekröpften Hebel 22' auf, so dass die Drehachse der Klappenwelle 14 wie zuvor in der gemeinsamen Ebene mit der Dichtfläche 19 liegt. Bei dieser Ausführungsform der Verbindungseinrichtung 12 ist jedoch die Kontaktfläche 17 zylindrisch ausgebildet und steht mit der ebenfalls zylindrisch ausgebildeten Gegenfläche 18 des Klappentellers 13 in Wirkkontakt. Ein Sicherungsbolzen 21 ist von der Rückseite in eine Öffnung des Klappentellers 13 eingefügt.Die kreisbogenförmige Bewegungsbahn L des Klappentellers 13 ist durch eine strichpunktierte in der Figur verdeutlicht. Durch diesen Bewegungsverlauf des Klappentellers 13 wird erreicht, dass der Klappenteller 13 am höchsten Punkt seiner Bewegungsbahn auf einen hier nicht dargestellten Dichtsitz im Turbinengehäuse trifft. Durch diese Anordnung wird im Gegensatz zu herkömmlichen Konstruktionen des Standes der Technik gewährleistet, dass der Klappenteller 13 gegenüber dem Dichtsitz keine Relativbewegung ausführen kann. Dies erhöht die Funktionsfähigkeit und Lebensdauer der Bauteile ganz erheblich.

In Ergänzung zur schriftlichen Offenbarung wird explizit auf die zeichnerische Darstellung verwiesen.

### Bezugszeichenliste

- 1: Turbolader/Abgasturbolader
- 2: Verdichter
- 3: Welle
- 4: Turbine
- 5: Abgaseinlass
- 6: Bypass(-leitung)
- 7: Abgasauslass
- 8: Absperrorgan
- 9: Abgasleitung
- 10: Lufteintritt
- 11: Luftaustritt
- 12: Verbindungseinrichtung
- 12': Verbrennungsmotor
- 13: Klappenteller
- 14: Klappenwelle
- 16: Ladedruckregelklappe
- 17: konusförmige Kontaktfläche
- 18: gerundete Gegenfläche
- 19: Dichtebene
- 20: Mittelachse der Klappenwelle
- 21: Sicherungsbolzen
- 22,22': Hebel
- 23: Befestigungsabschnitt

## Patentansprüche

1. Ladedruckregelklappenanordnung,
in der eine Ladedruckregelklappe (16) angeordnet ist, die einen Klappenteller (13) aufweist, der mittels einer Verbindungseinrichtung (12) mit einer Klappenwelle (14) verbunden ist, **dadurch gekennzeichnet, dass** die Verbindungseinrichtung (12) eine konusförmige Kontaktfläche (17) aufweist, die mit einer gekrümmten Gegenfläche (18) in Wirkverbindung steht.

2. Ladedruckregelklappenanordnung gemäß Anspruch 1, **dadurch gekennzeichnet, dass** die konusförmige Kontaktfläche (17) an einem Hebel (22) der Klappenwelle (14) und die gekrümmte Gegenfläche (18) am Klappenteller (13) angeordnet ist.

3. Ladedruckregelklappenanordnung gemäß Anspruch 1, **dadurch gekennzeichnet, dass** die konusförmige Kontaktfläche (17) am Klappenteller (13) und die gekrümmte Gegenfläche (18) an einem Hebel (22) der Klappenwelle (14) angeordnet ist.

4. Ladedruckregelklappenanordnung gemäß einem der Ansprüche 1 bis 3, **dadurch gekennzeichnet, dass** die Mittelachse (20) der Klappenwelle (14) in einer gemeinsamen Ebene mit der Dichtebene (19) des Klappentellers (13) liegt.

5. Turbolader (1)
- mit einem Verdichter (2)
- mit einer mit dem Verdichter (2) über eine Welle (3) verbundenen Turbine (4), die einen Abgaseinlass (5) und einen Abgasauslass (7) aufweist,
- mit einer Bypassleitung (6), die unter Umgehung der Turbine (4) vom Abgaseinlass (5) abzweigt und zum Abgasauslass (7) führt, und in der eine Ladedruckregelklappenanordnung angeordnet ist, die einen Klappenteller (13) aufweist, der mittels einer Verbindungseinrichtung (12) mit einer Klappenwelle (14) verbunden ist, **dadurch gekennzeichnet, dass** die Verbindungseinrichtung (12) eine konusförmige Kontaktfläche (17) aufweist, die mit einer gekrümmten Gegenfläche (18) in Wirkverbindung steht.

6. Turbolader (1) gemäß Anspruch 5, **gekennzeichnet durch** einen der Ansprüche 2 bis 4.

## Claims

1. Charge pressure regulating flap arrangement, in which is arranged a charge pressure regulating flap (16) which has a flap plate (13) which is connected by means of a connecting device (12) to a flap shaft (14), **characterized in that** the connecting device (12) has a conical contact surface (17) which is operatively connected to a curved mating surface (18).

2. Charge pressure regulating flap arrangement according to Claim 1, **characterized in that** the conical contact surface (17) is arranged on a lever (22) of the flap shaft (14) and the curved mating surface (18) is arranged on the flap plate (13).

3. Charge pressure regulating flap arrangement according to Claim 1, **characterized in that** the conical contact surface (17) is arranged on the flap plate (13) and the curved mating surface (18) is arranged on a lever (22) of the flap shaft (14).

4. Charge pressure regulating flap arrangement according to one of Claims 1 to 3, **characterized in that** the central axis (20) of the flap shaft (14) lies in a common plane with the sealing plane (19) of the flap plate (13).

5. Turbocharger (1)
- having a compressor (2)
- having a turbine (4) which is connected to the compressor (2) by means of a shaft (3) and which has an exhaust-gas inlet (5) and an exhaust-gas outlet (7),
- having a bypass line (6) which branches off from the exhaust-gas inlet (5) so as to bypass the turbine (4) and leads to the exhaust-gas outlet (7), and in which is arranged a charge pressure regulating flap arrangement which has a flap plate (13) which is connected by means of a connecting device (12) to a flap shaft (14), **characterized in that** the connecting device (12) has a conical contact surface (17) which is operatively connected to a curved mating surface (18).

6. Turbocharger (1) according to Claim 5, **characterized by** one of Claims 2 to 4.

## Revendications

1. Agencement de clapets de régulation de la pression de suralimentation, dans lequel est disposé un clapet de régulation de la pression de suralimentation (16) qui présente un plateau de clapet (13) qui est connecté à un arbre de clapet (14) au moyen d'un dispositif de connexion (12), **caractérisé en ce que** le dispositif de connexion (12) présente une surface de contact de forme conique (17) qui est en liaison fonctionnelle avec une surface conjuguée courbée (18).

2. Agencement de clapets de régulation de la pression de suralimentation selon la revendication 1, **caractérisé en ce que** la surface de contact de forme conique (17) est disposée sur un levier (22) de l'arbre de clapet (14) et la surface conjuguée courbée (18) est disposée sur le plateau du clapet (13).

3. Agencement de clapets de régulation de la pression de suralimentation selon la revendication 1, **caractérisé en ce que** la surface de contact de forme conique (17) est disposée sur le plateau de clapet (13) et la surface conjuguée courbée (18) est disposée sur un levier (22) de l'arbre de clapet (14).

4. Agencement de clapets de régulation de la pression de suralimentation selon l'une quelconque des revendications 1 à 3, **caractérisé en ce que** l'axe médian (20) de l'arbre de clapet (14) se situe dans un plan commun avec le plan d'étanchéité (19) du plateau de clapet (13).

5. Turbocompresseur (1)
- comprenant un compresseur (2)
- et comprenant une turbine (4) connectée au compresseur (2) par le biais d'un arbre (3), laquelle présente une entrée de gaz d'échappement (5) et une sortie de gaz d'échappement (7),
- et comprenant une conduite de dérivation (6), qui part de l'entrée de gaz d'échappement (5) en contournant la turbine (4) et qui conduit à la sortie de gaz d'échappement (7), et dans laquelle est disposé un agencement de clapets de régulation de la pression de suralimentation qui présente un plateau de clapet (13) qui est connecté à un arbre de clapet (14) au moyen d'un dispositif de connexion (12), **caractérisé en ce que** le dispositif de connexion (12) présente une surface de contact de forme conique (17) qui est en liaison fonctionnelle avec une surface conjuguée courbée (18).

6. Turbocompresseur (1) selon la revendication 5, **caractérisé par** l'une des revendications 2 à 4.
